# EUROPEAN PATENT APPLICATION

(11) **EP 2 003 186 A1**
(43) Date of publication of application: **17.12.2008**
(21) Application number: 08157796.7
(22) Date of filing: 06.06.2008
(51) Int. Cl.: C10G 25/12, F27D 7/02, B01J 20/34

(54) **Method And Apparatus For Regenerating Adsorbents Used In The Purification Of Fuel**

(30) Priority: 12.06.2007 US 761867
(71) Applicant: GENERAL ELECTRIC COMPANY, Schenectady, NY 12345 (US)
(72) Inventor: Osaheni, John Aibangbee, Clifton Park, NY 12065 (US); O'Neil, Gregory Allen, Clifton Park, NY 12065 (US); Fyvie, Thomas Joseph, Schenectady, NY 12308 (US)
(74) Representative: Szary, Anne Catherine

(57) **Abstract**

A method of regenerating an adsorbent used to remove nickel and/or vanadium impurities from fuel comprises washing the adsorbent with a low boiling solvent, heating the adsorbent in a device to a temperature of about 300°C to about 700°C, wherein the adsorbent comprises nickel and/or vanadium impurities, and fluidly mixing the adsorbent with a carrier gas stream to remove at least a portion of the nickel and/or vanadium impurities from the adsorbent.

## Description

### BACKGROUND

This disclosure relates to a method and apparatus for regenerating adsorbents, and more particularly, for regenerating adsorbents used to remove nickel and/or vanadium impurities from fuel.

As used herein, fuel can be any fuel contaminated with these metals, including fossil fuels, such as crude oils and crude oil fractions such as heavy fuel or low grade fuel, and bituminous, processed/distilled residues, such as coker oils, atmospheric and vacuum residual oil, fluid catalytic cracker feeds, metal containing deasphalted oils and resins, processed residual oil and heavy oils.

Crude oil fractions such as the heavy fuel or low grade fuel fractions which are desirable for powering gas turbine engines, are generally considered the poorest grade of crude oil because of the relatively high proportions of metals. The principal metal contaminants are nickel (Ni) and vanadium (V) in the form of metal ion complexes.

The vanadium and/or nickel metal ions are typically associated with porphyrins in the crude oil and are in the form of organometallic porphyrin complexes. Porphyrins are high molecular weight, high boiling organic materials. In the present disclosure, these organometallic complexes, and others of nickel and vanadium that might be present in the crude oil, are referred to as "nickel and/or vanadium impurities".

Nickel and vanadium in heavy fuel promote hot corrosion in gas turbines operating at temperatures above approximately 1000°C. To prevent hot corrosion otherwise, additives are added such as magnesium inhibitors. Efficiency is also sacrificed by maintaining operating temperatures below about 1000°C. Frequent cleaning of equipment to remove nickel and vanadium oxides deposited during combustion in the gas turbine is an additional drawback. Nickel and vanadium are also detrimental to refinery processes; for example, they poison catalysts used in the hydrocracking process of heavy crude oils. Consequently, methods are sought to remove these metals more efficiently and cost effectively from crude oil, in particular from heavy fuel or low grade fuel.

One method of removing nickel and/or vanadium impurities from crude oil involves passing the liquid oil fractions over solid adsorbents such as clays or activated carbon. Without being bound to theory, an adsorbent provides an internal surface where various chemical compounds (adsorbates) in the passing fluid can be held by Van der Waals and/or other molecular forces. When available adsorption sites are filled, the adsorbent becomes inactive, or spent. Currently, there is no known method of recycling adsorbents used in the purification of crude oil. To improve processing efficiency and reduce costs of purifying crude oil, regenerating (also referred to as reactivating) spent adsorbents for multiple use cycles is highly desirable. The need for regenerated adsorbents is expected to increase with the progressive depletion and rising cost of high quality crude oils.

Although regenerated adsorbents represent potentially significant cost savings, there are problems to overcome. Simply washing some adsorbents such as activated carbon with conventional solvents is not very effective in removing the tightly bound nickel and/or vanadium impurities. Moreover, desorption by heating alone is not a practical solution because nickel and/or vanadium impurities have relatively high boiling points.

Accordingly, a need exists in the art for methods of regenerating adsorbents used in purifying fuels contaminated with nickel and/or vanadium impurities, and in particular crude oil and crude oil fractions such as heavy fuel or low grade fuels.

### BRIEF SUMMARY

Methods are disclosed herein that effectively and efficiently regenerate adsorbents used in removing nickel and/or vanadium impurities from fuel. The methods are not limiting with respect to the organic moiety in the nickel or vanadium organometallic complexes.

The process includes heating the spent adsorbent under controlled conditions in a device, more particularly a direct or indirect heat transfer reactor, while contacting the spent adsorbent with a carrier gas stream. The heating conditions are carefully controlled so as not to adversely affect the porous properties of the adsorbent. The carrier gas can include, among others, gas turbine exhaust or steam boiler exhaust to remove thermally released volatile byproducts of nickel and/or vanadium impurities.

Thus, in one embodiment, a method of regenerating an adsorbent used to remove nickel and/or vanadium impurities from fuel comprises washing the adsorbent with a low boiling solvent, heating the adsorbent in a device to a temperature of about 300°C to about 700oC, wherein the adsorbent comprises nickel and/or vanadium impurities, and fluidly mixing the adsorbent with a carrier gas stream to remove at least a portion of the nickel and/or vanadium impurities from the adsorbent.

In another embodiment, a process for purifying fuel containing nickel and/or vanadium impurities, comprises mixing a solid adsorbent with a first quantity of the fuel to remove nickel and/or vanadium impurities, isolating the solid adsorbent wherein the adsorbent comprises the nickel and/or vanadium impurities, washing the solid adsorbent with a low boiling solvent, heating the solid adsorbent in a device to a temperature of about 300°C to about 700°C, fluidly mixing the adsorbent with a carrier gas stream for a time period effective to remove at least a portion of the nickel and/or vanadium impurities from the adsorbent and form a regenerated adsorbent; and mixing the regenerated adsorbent with a second quantity of the fuel to remove nickel and/or vanadium impurities.

In another embodiment, an apparatus for regenerating an adsorbent used to remove nickel and/or vanadium impurities from fuel comprises a gas turbine comprising an exhaust conduit, and a heating device in fluid communication with the exhaust conduit, wherein the heating device comprises a support surface for heating adsorbent placed thereon, and wherein the adsorbent comprises nickel and/or vanadium impurities.

The disclosure may be understood more readily by reference to the following detailed description of the various features of the disclosure and the examples included therein.

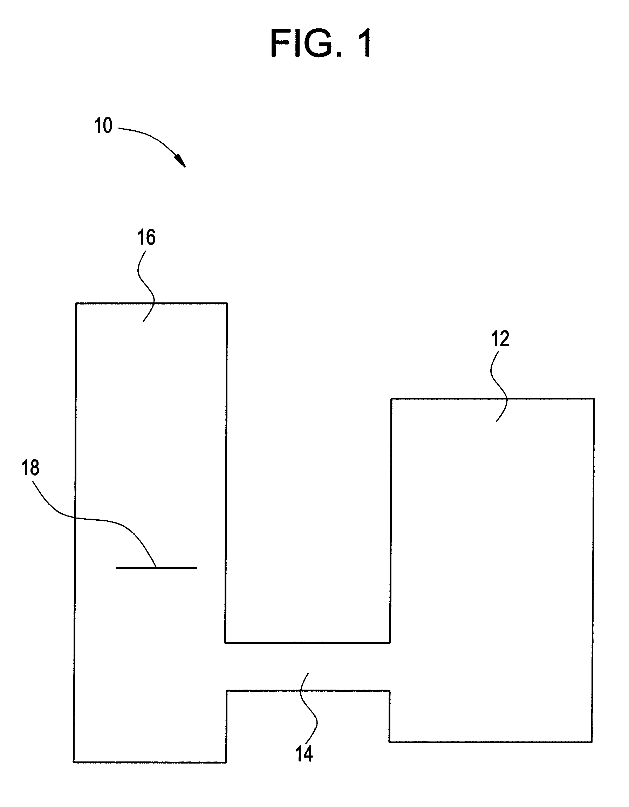

### BRIEF DESCRIPTION OF THE DRAWING

The figure is a schematic of an apparatus for regenerating an adsorbent.

### DETAILED DESCRIPTION

A significant improvement in the productive life of adsorbents used to purify fuels, in particular crude oil and crude oil fractions such as heavy fuel or low grade fuel is possible using the methods described herein. Spent adsorbents contaminated with nickel and/or vanadium impurities from heavy fuel purification are regenerated effectively and efficiently when carefully heated in a device, more particularly a direct or indirect heat transfer reactor, while in contact with a carrier gas stream. When coupled with a carrier gas stream comprising gas turbine engine or steam boiler exhaust gas, the method can further lower the cost of purifying heavy fuel.

The disclosed methods are not limiting with respect to the organic moiety in the organometallic complex, and include porphyrins and other organic materials that can form organometallic complexes with nickel or vanadium metal ions. Herein, the term "nickel and/or vanadium impurities" refers to a member selected from the group consisting of nickel organometallic complexes, vanadium organometallic complexes, and the combination thereof.

Those skilled in the art will appreciate that in addition to the nickel and vanadium impurities, other adsorbed crude oil components that do not contain nickel or vanadium are also necessarily removed during the heating process at or below the temperature effective in removing the nickel and/or vanadium impurities.

The process of purifying fuel, in particular crude oil and crude oil fractions, and more particularly heavy fuel or low grade fuel fractions containing nickel and/or vanadium impurities, involves mixing a solid adsorbent with the crude oil fractions in a dispersive mixer, optionally diluted with a low boiling solvent to reduce the viscosity and promote adsorption of the contaminants. The ratio of fuel to adsorbent can vary.

Generally, the ratio can range from 1000 - 1 parts fuel to 1 part adsorbent. After blending the mixture for a period of time, e.g., 1 minute to 1 hour, the adsorbent, now referred herein as a "spent adsorbent" is separated by centrifugation from the oil phase. Alternatively, the spent adsorbent can be isolated by filtration. The spent adsorbent is further washed with additional low boiling organic solvent to remove residual heavy oil before submitting it to the regeneration process. The organic solvent diluents can be removed from the fuel in a flash unit or distillation column. This process is capable of reducing the nickel and/or vanadium impurities in the fuel to less than 0.2 parts per million (ppm), depending on the choice of adsorbent and the starting fuel.

Although reference is made to spent adsorbents, it should be apparent to those skilled in the art that the spent adsorbent can still have available adsorption sites and that the process for regenerating the spent adsorbents described herein does not require all of the adsorption sites to be occupied with nickel and/or vanadium impurities or any other impurity. The term "spent adsorbent" is intended to refer to any adsorbent used in the process for purifying fuel that removes nickel and/or vanadium impurities, among others.

Residual oil trapped in the spent adsorbent can significantly impact the heating time of the regeneration step, as well as the final activity of the regenerated adsorbent. Suitable low boiling organic solvents for washing residual oil fractions from the spent adsorbent include lower chain and cyclic hydrocarbons, aromatic hydrocarbons, ethers, polyethers, cyclic ethers, esters, ketones, alcohols, and the like; more specifically, benzene, toluene, hexane, cyclohexane, petroleum ether, octane, cyclooctane, heptane, cycloheptane, pentane, diethyl ether, and acetone. As used herein, the term "low boiling solvent" refers to a solvent having a boiling point less than 120°C.

The spent adsorbent is then heated in a heating device in the presence of a carrier gas stream. Any device equipped with a heating chamber and a means for contacting the spent adsorbent with a carrier gas stream is suitable for regenerating the spent adsorbent. The heating apparatus can be charged with spent adsorbent continuously or periodically using an auger, conveyor, manual action, or other means including combinations thereof.

Without being bound by theory, the carrier gas is believed to effect regeneration of the adsorbent by removing volatile byproducts formed by a thermally induced reaction, dissociation, decomposition or other change in the adsorbed nickel and/or vanadium impurities at a temperature that is non-destructive to the porous properties of the adsorbent. The volatile byproducts are carried away from the adsorbent to an exhaust port where they can be detected, burned, scrubbed, or discarded by any means known in the art. After processing in this manner for a period of time effective to remove the nickel and/or vanadium impurities, the spent adsorbent will have been regenerated and can be reused.

Percolation of the carrier gas through the spent adsorbent, mechanically mixing the spent adsorbent in the carrier gas, or tumbling of the heating chamber itself provide efficient contact between the spent adsorbent and the carrier gas stream during the heating step. The carrier gas flow rate is selected based on the adsorbent and reactor configuration.

Suitable heating devices are direct or indirect heat transfer reactors; more specifically these include fluidized bed, tumbling bed, rotary kiln furnace, and drum dryers. Examples include Bepex International indirect dryers commercially available under the trade name Solidaire®, TorusDisc®, Thermascrew® and Continuator®, and the like. The apparatus can be scaled down for a skid design if necessary. The heating device can operate in batch-mode or continuous-mode.

In one embodiment, the spent adsorbent is regenerated in a fluidized bed reactor. The fluidized bed system maintains the spent adsorbent in a semi-fluid state formed by the percolation of the carrier gas stream through the solid adsorbent at high temperature.

In another embodiment, the spent adsorbent is heated in a rotary drum dryer. These are generally multi-stage dryers. For example, three-pass dryers include an elongated horizontal, axially rotatable body having an outer drum and a series of concentric smaller diameter drums within the outer drum. The drums are in communication with each other and define a serpentine flow path within the dryer. Such dryers are provided with a product inlet oriented for directing the spent adsorbent and hot gas stream into the innermost, smallest diameter drum, whereupon the product is conveyed via induced draft current through the outer drum until it reaches a passageway defined by the outer drum and the next inboard drum. At this point, the adsorbent is in its final regenerated state and is delivered for further handling or collection. Thus, three pass cylindrical dryers utilize comparatively high gas stream velocities and temperature conditions in the innermost drum (first pass). Lower gas stream velocities and lower temperatures are generally used in the intermediate drum (second pass), and even lower velocities and temperatures are used in the outer drum (third pass).

In another embodiment, the heating apparatus is a rotary kiln, a cylindrical vessel inclined slightly from the horizontal that is rotated slowly about its axis. The spent adsorbent is fed into the upper end of the cylinder. As the kiln rotates, the adsorbent gradually moves down towards the lower end, and may undergo a certain amount of stirring and mixing. A carrier gas stream is introduced inside the kiln, sometimes in the same direction as the process material (co-current), but usually in the opposite direction (counter-current). The rotary kiln connects with a material exit hood at the lower end and to ducts for the exhaust gas stream. The gases must be drawn through the kiln by a fan situated at the exhaust end. Exhaust gases contain dust and volatile byproducts which are scrubbed out.

Suitable carrier gases include carbon monoxide, carbon dioxide, oxygen, air, nitrogen, an inert gas, gas turbine exhaust gas, steam boiler exhaust gas, or combinations including at least one of the foregoing gases. The carrier gas does not have to be pre-heated. However, gas turbine exhaust gas and steam boiler exhaust gas offer potential cost advantages over other carrier gases because the exhaust gas can potentially be delivered to the heating device in a pre-heated condition. Also, these exhaust gases potentially do not require a gas purification step; for example, to lower oxygen content to mitigate potentially unwanted combustive (oxidative) side reactions at high temperature. This applies particularly to carbon based adsorbents that can react with carrier gas oxygen. Carrier gases can optionally be filtered prior to use to remove particulates or other undesirable components.

An effective temperature for regenerating spent adsorbent depends on the particular adsorbent, but for nickel and/or vanadium impurities reactor temperatures generally range from about 300°C to about 700°C, and more specifically from about 350°C to about 450°C. The threshold decomposition temperature (Ta) of the nickel and/or vanadium impurities is within this temperature range, where no significant adverse effect on the adsorbent pore properties occurs. The threshold decomposition temperature (Td) of the adsorbent is higher; that is, where irreversible partial or total loss of useful adsorbent surface area can occur. Adsorbents are selected wherein Td is greater than Ta.

The progress of the regeneration step can be monitored by analyzing the carrier gas stream for volatile byproducts released from the spent adsorbent. Suitable analytical techniques for the effluent gas stream include gas chromatography, ultraviolet absorption, visible light absorption, infrared light absorption, conductivity measurements, mass spectrometry, and combinations thereof. Alternatively, the complete release of volatile byproducts can be detected by monitoring the loss of adsorbent mass.

Undesirable oxidative side reactions or decompositions during the heating process, such as the oxidation of the adsorbent itself, can cause temperature spikes above Td. Selecting an appropriate temperature ramp in the heating device, can minimize or prevent these spikes. Effective heating rates are 1 to 50°C/min, and more specifically, 1 to 30°C/min.

The adsorbent is heated at the maximum temperature for a period of time effective in removing the volatile byproducts. The heating time depends on the temperature, the particular adsorbent, the carrier gas flow rate, and the type of heating apparatus. Representative heating times range from 5 minutes to 24 hours, and more specifically from 5 minutes to 3 hours, and most specifically 5 minutes to 1 hour.

Suitable adsorbents for the disclosed process are solid materials that are insoluble in and otherwise inert to the petroleum hydrocarbon oil fraction, and have a pore size compatible with adsorbing nickel and/or vanadium impurities. The internal pore structures of the adsorbents provide an internal surface where various chemical compounds (including nickel and/or vanadium impurities, among others) in the fuel can be retained within. A suitable adsorbent for a particular application depends on the physical/chemical characteristics of the adsorbate, the physical/chemical characteristics of the fuel that contains the nickel and/or vanadium impurities, and the concentration of the nickel and/or vanadium impurities in the fuel.

Exemplary classes of adsorbent materials for purifying fuel include activated aluminas, synthetically produced amorphous oxides from aluminum trihydrate, and the like. Aluminas can be beaded materials or powders with highly adsorptive capabilities. Other suitable adsorbents include naturally occurring clays and silicates, e.g., diatomaceous earth, fuller's earth, kieselguhr, attapulgus clay, feldspar, montmorillonite, halloysite, kaolin, and the like, and also the naturally occurring or synthetically prepared refractory inorganic oxides such as zirconia, thoria, boria, precipitated silica, silica-alumina, silica-zirconia, alumina-zirconia, and the like. Still other adsorbents include activated carbons such as those produced by the destructive distillation of wood, peat, lignite, nutshells, bones, coconut shells and other carbonaceous matter. The unique structure can have a very large surface area of between 400-1200 square meters per gram, or more. Higher surface area materials are also available up to 2400 square meters per gram. Activated carbons are non-polar which provides an affinity for non-polar adsorbates such as organics. Charcoal, and more specifically activated charcoal are active adsorbents for metal chelates. Petroleum coke can also be used as an adsorbent, which can have the physical and chemical properties required for many carbon adsorption applications (e.g., activated carbon). Petroleum coke is a carbonaceous solid derived from oil refinery coker units or other cracking processes.

The shapes and sizes of pores are factors in selecting the adsorbent. Pores are typically classified into three different size categories: micropores, mesopores, and macropores. Micropores generally have a diameter of less than 2 nanometers; mesopores generally have diameters between 2 and 50 nanometers; and macropores generally have diameters greater than 50 nanometers. Micropores and mesopores primarily give porous materials their adsorption capacities. These types of pores are often formed during the process of activation. Activation is basically further development of pores in low porous raw material by chemical reactions. Traditionally, 'physical' activation (i.e. oxidation with gases: steam, carbon dioxide, or air) and chemical activation (i.e. reaction with chemical agents prior to heat treatment) are two processes that give fundamentally different pore structures.

Various measured parameters of pore structure provide relative indications of adsorption performance. Three of the most common adsorption parameters are internal porosity, pore size distribution, and internal surface area. These parameters are useful for general comparison of potential adsorption character among adsorbents. By way of example, the internal and external porosities of petroleum cokes can approach and exceed 60% and 35%, respectively. The pore size can range from about 5 to about 50 angstroms. Thus, the surface area of petroleum coke can approach and exceed 600 square meters per gram. These carbon adsorption characteristics compare favorably with those properties for activated carbon from other sources.

Adsorption characteristics can vary considerably and are not absolute in terms of measured adsorption parameters. As such, it is difficult to specifically define adsorption character using specific ranges of analytical measurements of adsorption parameters. Instead, adsorption character is more appropriately dealt with on a case-by-case basis. The adsorption properties are also dependent on the specific adsorbate(s) and conditions of a particular adsorption application. Ranges of specifications for desired adsorption properties serve as guides for most situations. Variance outside of the ranges can occur in some cases due to variability in the physical and chemical conditions of adsorption, and other factors. Thus, the present disclosure is not limited to specific ranges, but also includes variance from these ranges.

Carbonaceous materials with very high porosity and large surface areas generally provide good adsorption qualities for nickel and/or vanadium impurities in fuel.

Activated carbons are highly porous and provide exceptional adsorption capabilities. Most of the total surface area is found in the micropores. Typical data for an activated carbon are greater than 500 square meters per gram in micropores, 10 to 100 square meters per gram in mesopores, and less than 10 square meters per gram in macropores.

Typically, only part of the total surface area is accessible for the molecules to be adsorbed. Most of these larger compounds, by their size, are excluded from a large part of the micropore system. As such, a carbon with high number of mesopores is required, and a carbon with high total surface area of predominantly micropores provides little or no value. Ideally, the carbon should have a large number of pores, which are just slightly larger than the size of the molecules to be adsorbed. Smaller pores are inaccessible, and much larger pores provide relatively little surface area per unit volume.

An additional process is further disclosed herein for purifying fuel containing nickel and/or vanadium impurities. This process comprises the steps of mixing a solid adsorbent with a first quantity of the fuel to remove nickel and/or vanadium impurities, isolating the solid adsorbent, washing the solid adsorbent with a low boiling solvent, heating the solid adsorbent in a heating device to a temperature of about 300°C to about 700°C, fluidly mixing a carrier gas with the solid adsorbent for a time period effective to remove at least a portion of the nickel and/or vanadium impurities from the solid adsorbent and form a regenerated solid adsorbent, and mixing the regenerated solid adsorbent with a second quantity of the fuel to remove nickel and/or vanadium impurities. This process can be conducted in both batch and continuous mode.

In an additional embodiment, an apparatus, shown generally as 10 in the figure, is disclosed for regenerating an adsorbent used to remove nickel and/or vanadium impurities from fuel. The apparatus comprises a gas turbine or steam boiler, 12, comprising an exhaust conduit, 14, and a heating device, 16, in fluid communication with the exhaust conduit, wherein the heating device has a support surface, 18, for heating the spent adsorbent under carefully controlled conditions while in contact with the gas turbine exhaust gas for a period of time effective in regenerating the adsorbent.

The following examples fall within the scope of, and serve to exemplify, the more generally described methods set forth above. The examples are presented for illustrative purposes only, and are not intended to limit the scope of the invention.

### Example 1.

Spent activated carbon adsorbent (Calgon RB, a ball milled carbon sold by Calgon Carbon Corporation) that was used in the adsorption of nickel and/or vanadium impurities from Coker oil was washed with cyclohexane and dried. A small sample of the spent activated carbon adsorbent was regenerated using a thermogravimetric analyzer (TGA) and air carrier gas. A sample (20 milligrams) was placed on a TGA pan that was programmed to heat up at 10°C per minute to 500°C. A control sample of unused activated carbon was also heated in the same manner for comparison. After the heating step, the regenerated carbon was used again to adsorb vanadium tetraphenylporphyrin (50 ppm) from an acetone solution (vanadium concentration 50 ppm). The regenerated carbon was found to be as effective as the control carbon in adsorbing a vanadium model compound, vanadium tetraphenlyporphyrin, from solution. UV-visible spectrum of the solution after adsorption of the model compound was indistinguishable from that of pure acetone, indicating complete adsorption.

### Example 2.

In a 1-in tube furnace at 450°C, 0.5 grams of spent carbon (Calgon RB) that was washed before with cyclohexane was placed in a boat and introduced to the furnace. Air was blown over the carbon to sweep off the decomposition products. After 2 hours, the boat was unloaded and the carbon was allowed to cool to room temperature. The efficacy of regeneration was determined against a control sample of activated carbon using an acetone solution of vanadium tetraphenylporphyrin (50 ppm) as described in Example 1. The regenerated carbon was found to be as effective as the control carbon.

Thus, the methods and apparatus disclosed herein provide a means of efficiently regenerating and recycling a spent adsorbent contaminated with nickel and/or vanadium impurities from the purification of fuel, in particular crude oil and crude oil fractions, and more particularly heavy fuel or low grade fuel desirable to be used in gas turbine engines. The method offers significant potential process related cost savings in the purification of crude oil and crude oil fractions.

The singular forms "a," "an," and "the" include plural referents unless the context clearly dictates otherwise. The endpoints of all ranges directed to the same characteristic or component are independently combinable and inclusive of the recited endpoint.

While the invention has been described with reference to the embodiments thereof, it will be understood by those skilled in the art that various changes can be made and equivalents can be substituted for elements thereof without departing from the scope of the invention. In addition, many modifications can be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims.

## Claims

1. A method of regenerating an adsorbent used to remove nickel and/or vanadium impurities from fuel, comprising:
washing the adsorbent with a low boiling solvent,
heating the adsorbent in a device to a temperature of about 300°C to about 700oC, wherein the adsorbent comprises nickel and/or vanadium impurities, and
fluidly mixing the adsorbent with a carrier gas stream to remove at least a portion of the nickel and/or vanadium impurities from the adsorbent.

2. The method of Claim 1, wherein heating is at a rate effective to prevent a temperature increase above the decomposition temperature of the adsorbent.

3. The method of any one of the preceding claims, wherein heating is at a rate of 1°C to 30°C per minute.

4. The method of any one of the preceding claims, wherein the temperature is 350°C to 450°C.

5. The method of any one of the preceding claims, wherein the carrier gas comprises carbon monoxide, carbon dioxide, air, nitrogen, an inert gas, gas turbine exhaust gas, steam boiler exhaust gas or combinations including at least one of the foregoing gases.

6. The method of any one of the preceding claims, wherein the adsorbent is activated carbon, activated alumina, diatomaceous earth, fuller's earth, kieselguhr, attapulgus clay, feldspar, montmorillonite, halloysite, kaolin, zirconia, thoria, boria, silica-alumina, silica-zirconia, alumina-zirconia, precipitated silica, or a combination comprising at least one of the foregoing adsorbents.

7. The method of any one of the preceding claims, wherein the device is a heat transfer reactor.

8. The method of any one of the preceding claims, wherein the device is selected from the group consisting of a fluidized bed reactor, a rotary drum dryer, and a rotary kiln.

9. The method of any one of the preceding claims, wherein the fuel is selected from the group consisting of crude oil and crude oil fractions.

10. The method of any one of the preceding claims, wherein the crude oil fraction is a heavy fuel fraction.

11. The method of any preceding claim, wherein the device operates in batch-mode or continuous-mode.

12. The method of any preceding claim, wherein the low boiling solvent has a boiling point less than 120°C.

13. The method of any preceding claim, wherein the low boiling solvent is selected from the group consisting of cyclic hydrocarbon, aromatic hydrocarbon, ether, polyether, cyclic ether, ester, ketone, benzene, toluene, hexane, cyclohexane, petroleum ether, octane, cyclooctane, heptane, cycloheptane, pentane, diethyl ether, acetone, alcohol, and a combination comprising at least one of the foregoing solvents.

14. An apparatus for regenerating an adsorbent used to remove nickel and/or vanadium impurities from fuel, the apparatus comprising:
a gas turbine or steam turbine comprising an exhaust conduit; and
a heating device in fluid communication with the exhaust conduit, wherein the heating device comprises a support surface for heating the adsorbent placed thereon wherein the adsorbent comprises nickel and/or vanadium impurities.
